# EUROPÄISCHE PATENTSCHRIFT

(11) **EP 3 762 172 B1**
(45) Veröffentlichungstag und Bekanntmachung des Hinweises auf die Patenterteilung: **22.11.2023**
(21) Anmeldenummer: 19711014.1
(22) Anmeldetag: 01.03.2019
(51) Int. Cl.: B23K 1/08, B23K 3/06

(54) **LÖTDÜSE UND LÖTANLAGE**
SOLDERING NOZZLE AND SOLDERING INSTALLATION
BUSE DE BRASAGE ET INSTALLATION DE BRASAGE

(30) Priorität: 08.03.2018 DE 102018105388
(43) Veröffentlichungstag der Anmeldung: 13.01.2021
(73) Patentinhaber: Ersa GmbH, 97877 Wertheim (DE)
(72) Erfinder: LEISERING, Alexander, 97877 Wertheim (DE)
(74) Vertreter: DREISS Patentanwälte PartG mbB
(86) Internationale Anmeldenummer: PCT/EP2019/055115
(87) Internationale Veröffentlichungsnummer: WO 2019/170535

(56) Entgegenhaltungen:
- DE-B3-102013 110 731
- DE-U1- 20 200 554

## Beschreibung

Die Erfindung betrifft eine Lötdüse zum gleichzeitigen selektiven Wellenlöten zumindest zweier beabstandet angeordneter Reihen von Lötstellen in einer Lötanlage, mit einem Grundkörper, der einen einem auf einer Düsenplatte anordenbaren Basisabschnitt und einen im Betrieb die Lötwelle ausbildenden, eine umlaufende Wandung mit einer freien Oberseite aufweisenden Wellenabschnitt aufweist, und mit wenigstens einem in den Wellenabschnitt einsetzbaren, mit Lot benetzbaren Trennstreifen. Die Erfindung betrifft auch eine Lötanlage mit wenigstens einer derartigen Lötdüse.

Lötdüsen der eingangs genannten Art sind beispielsweise aus der DE 10 2013 110 731 B3 bekannt. Eine Lötdüse mit Merkmalen des Oberbegriffs des Anspruchs 1 ist beispielsweise aus der DE 202 00 554 U1 bekannt.

Bei der Herstellung bestückter Leiterplatten werden die auf der Leiterplatte angeordneten Bauteile durch selektives Wellenlöten mit der Leiterplatte verbunden. Bei Anlagen zum selektiven Wellenlöten werden häufig mehrere Lötdüsen beispielsweise auf einer Düsenplatte so angeordnet, dass die Austrittsöffnungen der Lötdüsen in der Lötposition im Wesentlichen vertikal nach oben weisen. Dabei ist der Querschnitt jeder Lötdüse lötbereichpezifisch geformt, und jede Lötdüse ist einem bestimmten zu lötenden Bereich der Platine zugeordnet. Zum Löten wird die Lötdüse bzw. die Düsenplatte mit den darauf angeordneten Lötdüsen von unten an die zu lötende Platine herangefahren. Dabei wird gleichzeitig der Innenraum der Lötdüse von unten mit flüssigem Lot durchströmt, welches an der in Lötposition obenliegenden Düsenöffnung wellenartig austritt und die dort positionierten Lötstellen der Platine so benetzt, dass die gewünschte Lötverbindung zwischen dem zu verlötenden Bauteil - bzw. zwischen dem Drahtüberstand des Bauteils - und dem zugehörigen Bereich der Platinen-Leiterbahn hergestellt wird.

Einer exakten Kontrolle aller Prozessparameter, wie beispielsweise Temperaturen, Lotdurchflussmengen, Abständen, Vorschubgeschwindigkeiten usw. kommt beim selektiven Wellenlöten, bzw. beim Multi-Wellenlöten mit mehreren Lötdüsen, eine hohe Bedeutung zu, um mit hoher Reproduzierbarkeit qualitativ hochwertige Lötstellen zu erhalten. Eine zentrale Anforderung beim Wellenlöten liegt ferner darin, dass zwischen benachbarten Lötstellen keine unerwünschten Lötbrücken beispielsweise durch verschlepptes oder überschüssiges Lot, bzw. durch unerwünscht zurückbleibende Lötperlen entstehen dürfen.

Um das hierzu erforderliche definierte rechtzeitige Abreißen des Lotstroms nach der jeweiligen Benetzung bzw. Verlötung einer Lötstelle oder einer Reihe aus Lötstellen zu gewährleisten, ist es bekannt, im Bereich der Lötwelle bzw. Lötdüse beispielsweise metallische Streifen aus mit Lot benetzbarem Material anzuordnen. Diese Metallstreifen werden während des Lötvorgangs in unmittelbare Nähe der Lötstelle bzw. einer Reihe aus Lötstellen bewegt. Im Verlauf der Lötung bildet sich eine Verbindung aus flüssigem Lot zwischen der Lötstelle und dem Metallstreifen. Auf diese Weise soll überschüssiges Lot von der Platine bzw. von den Lötstellen weggeführt werden, um damit die Entstehung unerwünschter Lötbrücken zwischen benachbarten Lötstellen oder benachbarten Reihen aus Lötstellen zu verhindern.

Bei der DE 10 2013 110 731 B3 werden jeweils mehrere Trennstreifen als Streifenpakete von einem Rahmen umgeben, wobei der gesamte Rahmen samt den Trennstreifen dann in eine Lötdüse eingesetzt wird. Für verschiedenartig ausgebildete und verschiedene Geometrien aufweisende Lötdüsen sind folglich unterschiedliche Streifenpakete erforderlich.

Aus der CN 104084661 A1 und der DE 102014 119 682 A1 sind Lötdüsen mit in Lötdüsen angeordneten Trennstreifen bekannt.

Der vorliegenden Erfindung liegt die Aufgabe zugrunde, Lötdüsen bereitzustellen, die den oben beschriebenen Anforderungen gerecht werden und die dennoch einen einfachen und funktionssicheren Aufbau aufweisen und auf einfache Art und Weise funktionssicher arbeiten und austauschbar sind.

Diese Aufgabe wird gelöst durch eine Lötdüse mit den Merkmalen des Patentanspruchs 1. Folglich ist insbesondere vorgesehen, dass der wenigstens eine Trennstreifen als rahmenloser Trennstreifen ausgebildet ist. Ferner ist vorgesehen, dass im Grundkörper Haltemittel zum Halten des Trennstreifens vorgesehen sind. Mit den Haltemittel wird folglich verhindert, dass der Trennstreifen ungewollt, beispielsweise aufgrund der Ausbildung der Lotwelle, aus dem Wellenabschnitt ausgespült wird. Die Haltemittel sind dabei als magnetisch wirkende Mittel ausgebildet. Der Trennstreifen ist dabei wenigstens abschnittsweise aus ferromagnetischem Material, wobei die Haltemittel als am Grundkörper vorgesehene Haltemagnete ausgebildet sind. Dabei ist denkbar, dass auf der dem Trennstreifen abgewandten Seite des Bodens des Wellenabschnitts Magnetausnehmungen vorgesehen sind, in denen mit dem Trennstreifen zusammenwirkende Haltemagnete angeordnet sind. Dadurch, dass die Haltemagnete unter dem Boden des Wellenabschnitts angeordnet sind, kommen diese nicht mit dem flüssigen Lot in Kontakt. Die Haltemagnete sind folglich sicher geschützt angeordnet und unterliegen keiner Verschmutzung und keinem Verschleiß.

Dadurch kann erreicht werden, dass der Trennstreifen als Einzel-Trennstreifen lösbar in den Wellenabschnitt eingesetzt werden kann. Er ist folglich unabhängig von anderen Trennstreifen ausgebildet und bildet dann, anders als bei der DE 10 2013 110 731 B1 kein Streifenpaket mit einem Rahmen. Insgesamt kann hierdurch eine hohe Flexibilität erreicht werden. Die Trennstreifen können dadurch auch einzeln kostengünstig hergestellt werden. Auch bei unterschiedlichen Geometrien der Lötdüse bzw. der Innengeometrie des Wellenabschnitts können Trennstreifen gemäß der Erfindung in den jeweiligen Wellenabschnitt eingesetzt werden.

Der jeweilige Trennstreifen weist freie Schmalseiten und eine Unterseite auf, wobei die Schmalseiten und/oder die Unterseite bei in den Wellenabschnitt eingesetztem Trennstreifen an Anlageabschnitten zum Anliegen kommen. Hierdurch kann der Trennstreifen im Wellenabschnitt so positioniert werden, dass eine geeignete Führung des flüssigen Lots entlang des Wellenabschnitts erreicht werden kann.

Ferner ist vorgesehen, dass die Anlageabschnitte als die die Schmalseiten und/oder die Unterseite des Trennstreifens aufnehmende Aufnahmenuten ausgebildet sind. Dadurch kann ein sicheres Anordnen des Trennstreifens im Wellenabschnitt erreicht werden.

Die Aufnahmenuten werden von in den Grundkörper eingesetzten Einsatzteilen gebildet. Die Einsatzteile können dabei vorzugsweise aus Metall sein. Dies hat den Vorteil, dass die Aufnahmenuten vergleichsweise genau und verschleißsicher ausgebildet werden können.

Eine weitere vorteilhafte Anordnung ergibt sich dann, wenn die Einsatzteile zur Höhenverstellung des Trennstreifens gegenüber dem Grundkörper höhenverstellbar ausgebildet sind. Durch eine insbesondere senkrecht zur Düsenplatte verlaufende Höhenverstellung kann der Trennstreifen optimal an den Lötprozess angepasst werden.

Dabei ist vorteilhaft, wenn die Einsatzteile einen Bolzenabschnitt aufweisen, der in einer Bolzenführung des Grundkörpers axial verschiebbar angeordnet ist und wenn Festsetzmittel zum Festsetzen des Bolzenabschnitts in der Bolzenführung vorgesehen sind. Als Festsetzmittel kommen beispielsweise quer zum Bolzenabschnitt angeordnete Klemmschrauben in Betracht, deren freies Ende zur Festsetzung des Bolzenabschnitts gegen den Bolzenabschnitt wirkt.

Um zu gewährleisten, dass auch bei unterschiedlichen Temperaturen ein sicheres Anordnen der Magnete im Grundkörper gewährleistet wird, ist es vorteilhaft, wenn Vorspannfedern vorgesehen sind, mit denen die Haltemagnete in Richtung des Trennstreifens gegen den Boden des Wellenabschnitts vorgespannt angeordnet werden. Die Vorspannfedern können dabei als Schraubenfedern ausgebildet sein, deren eines Ende sich am jeweiligen Haltemagnet und deren anderes Ende sich an einem in den Grundkörper einschraubbaren Gewindebolzen abstützt. Die Haltemagnete als solche können folglich in einer Sackbohrung angeordnet sein, wobei dann der Boden der Sackbohrung auch den Boden des Wellenabschnitts bildet. Die Bohrung wird auf der dem Boden abgewandten Seite mit dem Gewindebolzen verschlossen, wobei zwischen dem Gewindebolzen und dem Magneten die jeweilige Vorspannfeder angeordnet ist.

Die eingangs genannte Aufgabe wird auch gelöst durch eine Lötanlage mit einer Düsenplatte und mit wenigstens einer an der Düsenplatte vorgesehenen erfindungsgemäßen Lötdüse.

Weitere Einzelheiten und vorteilhafte Ausgestaltungen der Erfindung sind der nachfolgenden Beschreibung zu entnehmen, anhand derer verschiedene Ausführungsbeispiele der Erfindung näher beschrieben und erläutert sind.

Es zeigen:
- Figur 1: eine Schrägansicht auf eine Düsenplatte mit zwei Lötdüsen einer ersten erfindungsgemäßen Ausführungsform;
- Figur 2: eine Lötdüse aus Figur 1 als Einzelteil;
- Figur 3: eine Schrägansicht auf zwei Lötdüsen einer zweiten erfindungsgemäßen Ausführungsform;
- Figur 4: eine Lötdüse aus Figur 3 als Einzelteil; und
- Figur 5: eine Schrägansicht auf Lötdüsen einer dritten erfindungsgemäßen Ausführungsform.

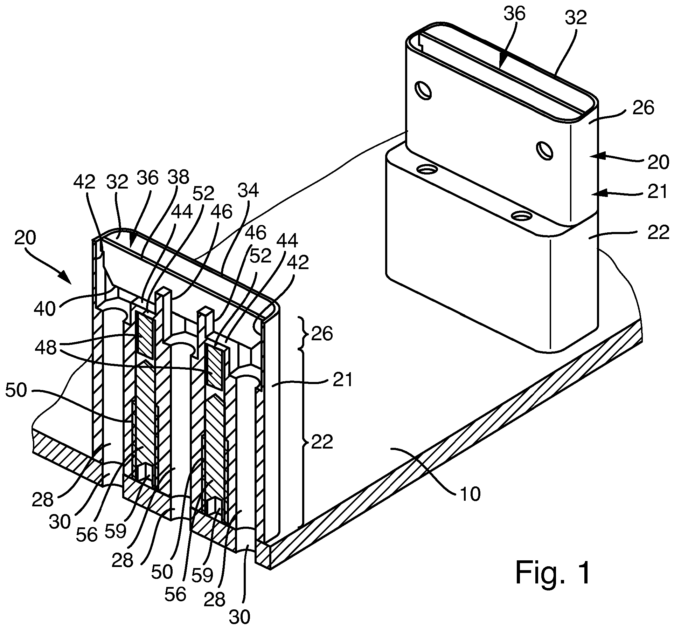

In der Figur 1 ist eine Düsenplatte 10 einer Lötanlage gezeigt. Auf der Düsenplatte 10 sind zwei Lötdüsen 20 angeordnet. Jede Lötdüse 20 weist einen Grundkörper 21 mit einem einen Basisabschnitt 22 auf, über den die jeweilige Lötdüse 20 auf der Düsenplatte 10 beispielsweise mit Schrauben befestigt ist. Die Grundkörper 21 20 weisen ferner einen Wellenabschnitt 26 auf, in den sich im Betrieb der Düsenplatte 10 eine Welle aus flüssigem Lot bildet. Der jeweilige Basisabschnitt 22 weist senkrecht zur Düsenplatte 10 verlaufende Lotführungen 28 auf, welche mit Zuführbohrungen 30 in der Düsenplatte 10 korrespondieren. Über die Lotführungen 28 kann folglich im Betrieb flüssiges Lot in den Wellenabschnitt 26 fließen. Der Wellenabschnitt 26 weist dabei eine umlaufende Wandung 32 mit einer freien Oberkante 34 auf.

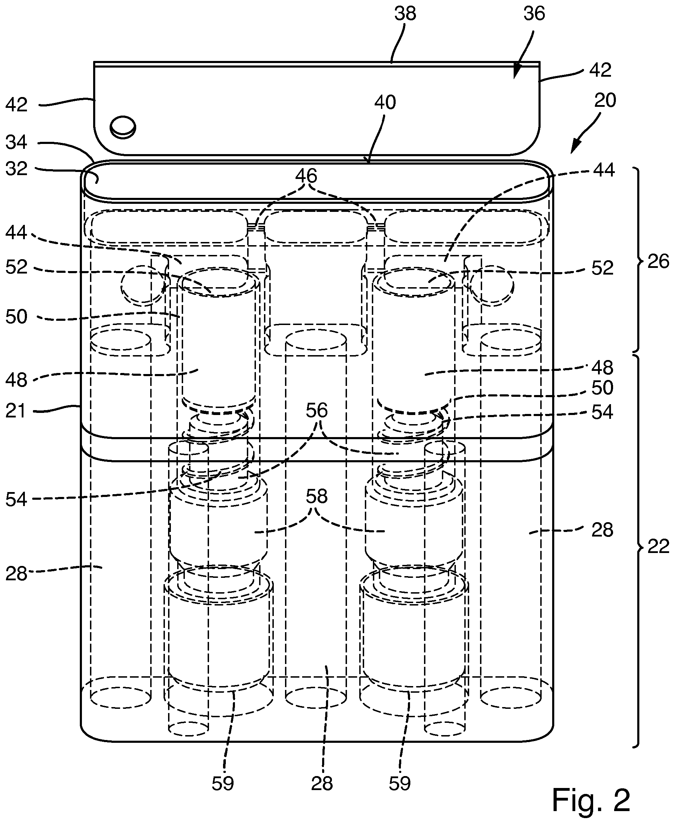

Wie aus den Figuren 1 und 2 deutlich wird, ist ein rahmenloser Trennstreifen 36 in den Wellenabschnitt 26 eingesetzt. Der Trennstreifen 36 ist dabei flach ausgebildet und weist eine Oberseite 38, eine Unterseite 40 und zwei Schmalseiten 42 auf. Die Schmalseiten 42 liegen dabei an der Innenseite der Wandung 32 an. Die Wandung 32 kann dabei im Bereich der Schmalseiten 42 des Trennstreifens 36 nutartige Aufnahmeabschnitte zur Aufnahme der Schmalseiten 42 vorsehen.

Die Unterseite 40 des Trennstreifens 36 liegt bei in den Wellenabschnitt 26 eingesetztem Trennstreifen 36 an Anlageabschnitten 44 des Grundkörpers 21 an. Ferner sind die Unterseite des Trennstreifens 36 aufnehmende Aufnahmenuten 46 vorgesehen. Der Trennstreifen 36 wird folglich beim Einsetzen in den Wellenabschnitt 26 in die Aufnahmenuten 46 eingesetzt, wodurch der Trennstreifen 36 letztlich positionsgenau in dem Wellenabschnitt 26 angeordnet wird.

Der Trennstreifen 36 ist dabei aus einem mit Lot benetzbaren Material, wie beispielsweise Stahl. Dadurch kann erreicht werden, dass überschüssiges Lot von der Platine, bzw. von den Lötstellen, beim Löten weggeführt werden kann, um damit die Entstehung unerwünschter Lötbrücken zwischen benachbarten Lötstellen oder benachbarten Reihen aus Lötstellen zu verhindern.

Der in den Figuren 1 und 2 gezeigte Trennstreifen 36 kann aus einem Flachmaterial auf einfache Art und Weise hergestellt werden und in die zugehörige Lötdüse 20, bzw. deren Wellenabschnitt 26, eingesetzt werden.

Wie aus insbesondere der Figur 2 deutlich wird sind im Grundkörper 21 Haltemittel in Form von zwei Haltemagneten 48 vorgesehen, die den aus einem ferromagnetischen Material hergestellten Trennstreifen 36 im Wellenabschnitt 26 halten. Dadurch wird verhindert, dass im Betrieb der Trennstreifen 36 aus dem Wellenabschnitt 26 ausgespült wird.

Die Haltemagnete 48 sind in im Basisabschnitt 22 vorgesehenen, von der Seite der Düsenplatte 10 zugänglichen Magnetausnehmungen in Form von Sacklöchern 50 vorgesehen. Zwischen dem Haltemagnete 48 und den Anlageabschnitten 44 ist folglich ein Bodenabschnitt 52 vorgesehen. Das jeweilige Magnetfeld der Haltemagnete 48 wirkt durch den jeweiligen Bodenabschnitt 52 hindurch, um den Trennstreifen 36 gegen den jeweiligen Anlageabschnitt 44 zu beaufschlagen.

Um sicherzustellen, dass der jeweilige Haltemagnet 48 am Bodenabschnitt 52 sicher zum Anliegen kommt, auch bei der Betriebstemperatur von flüssigen Lot, ist im jeweiligen Sackloch 50 jeweils eine Vorspannfeder 54 vorgesehen. Die Vorspannfedern 54 sind so angeordnet, dass deren eines Ende sich am jeweiligen Haltemagnet 48 abstützt und deren anderes Ende sich an einem in das jeweilige Sackloch 50 eingeschraubten Gewindebolzen 56 abstützt. Die Gewindebolzen 56 sehen dazu ein Gewinde 58 vor, das mit einem am jeweiligen Sackloch 50 vorgesehenen Gegengewinde zusammenwirkt. Zum Einschrauben der Gewindebolzen 56 weisen diese auf der dem jeweiligen Haltemagneten 48 abgewandten Unterseite eine Schlüsselaufnahme 59, beispielsweise in Form eines Innensechskants, auf.

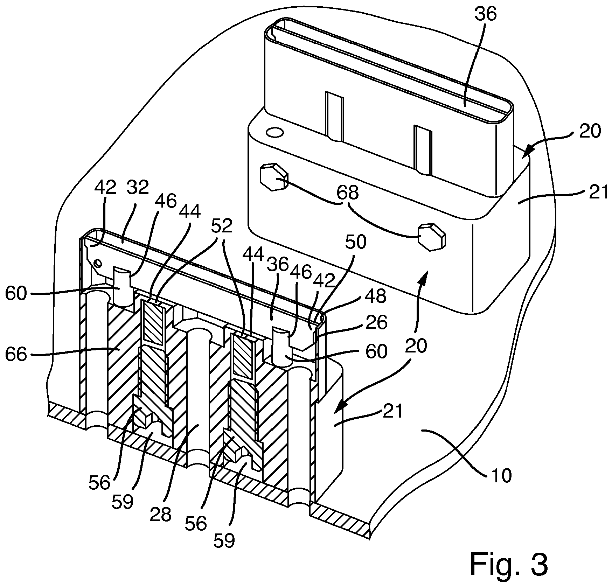

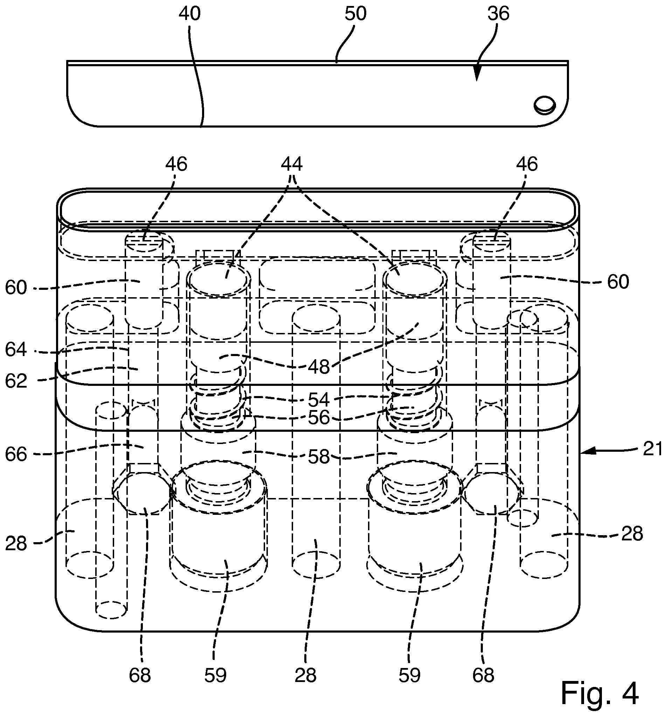

In der Figur 3 ist ein dem Figur 1 entsprechender Ausschnitt einer Düsenplatte 10 mit Lötdüsen 20 gezeigt, wobei der Figur 1 entsprechende Bauteile mit entsprechenden Bezugszeichen versehen sind. In der Figur 4 ist eine Lötdüse 21 gemäß Figur 3 als Einzelteil dargestellt. Im Unterschied zur Ausführungsform gemäß Figuren 1 und 2 werden bei der Ausführungsform gemäß Figur 3 und 4 die Aufnahmenuten 46 von in den Grundkörper 21 eingesetzten Einsatzteilen 60 gebildet. Die Einsatzteile 60 sind dabei am Grundkörper 21 höhenverstellbar ausgebildet. Die Einsatzteile 60 weisen einen Bolzenabschnitt 62 auf, der in einer Bolzenführung 64 axial, also senkrecht zur Ebene der Düsenplatte 10 verschiebbar angeordnet ist. Ferner sind Festsetzmittel in Form von Klemmschrauben 66 vorgesehen, die zur Festsetzung der Einsatzteile 60 gegen den jeweiligen Bolzenabschnitt 62 wirken. Die Klemmschrauben 66 sehen zugängliche Schraubenköpfe 68 vor, welche mit einem Schlüssel gegen den bzw. weg vom jeweiligen Bolzenabschnitt 62 betätigbar sind. Dadurch kann die Höhe der Oberkante 38 des Trennstreifens 36 so eingestellt werden, dass ein Abstreifen des überschüssigen Lots in günstiger Art und Weise erfolgt.

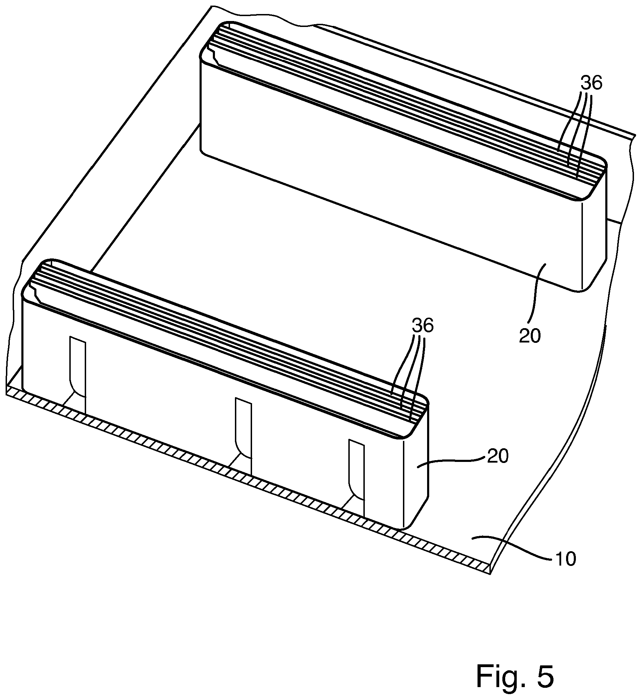

In der Figur 5 ist eine weitere Ausführungsform einer Düsenplatte 10 mit Lötdüsen 20 gezeigt. Der Figur 1 bis 4 entsprechende Bauteile sind mit entsprechenden Bezugszeichen versehen. Wie aus Figur 5 deutlich wird, sind hier mehrere Trennstreifen 36 in einem Wellenabschnitt 26 einer Lötdüse 20 angeordnet. Die Trennstreifen 36 sind dabei jeweils als einzelne Trennstreifen 36 ausgebildet und weisen keinen die Trennstreifen 36 miteinander verbindenden Rahmen auf. Dies hat den Vorteil, dass eine unterschiedliche Anzahl von Trennstreifen 36 vorgesehen werden kann, je nach Lötaufgabe, je nach zu lötender Leiterplatine und je nach zum Einsatz kommen der Lötdüse.

## Patentansprüche

1. Lötdüse (20) zum gleichzeitigen selektiven Wellenlöten zumindest zweier beabstandet angeordneter Reihen von Lötstellen in einer Lötanlage, mit einem Grundkörper (21), der einen auf einer Düsenplatte (10) anordenbaren Basisabschnitt (22) und einen im Betrieb die Lötwelle ausbildenden, eine umlaufende Wandung (32) mit einer freien Oberseite (34) aufweisenden Wellenabschnitt (26) aufweist, und mit wenigstens einem in den Wellenabschnitt (26) einsetzbaren, mit Lot benetzbaren Trennstreifen (36), wobei der wenigstens eine Trennstreifen (36) rahmenlos und wenigstens abschnittsweise aus ferromagnetischem Material ausgebildet ist, wobei der Trennstreifen (36) freie Schmalseiten (42) und eine Unterseite aufweist, wobei die Schmalseiten (42) und/oder die Unterseite (40) bei in den Wellenabschnitt (26) eingesetztem Trennstreifen (36) an Anlageabschnitten (44) zum Anliegen kommen, und wobei die Anlageabschnitte als die die Schmalseiten (42) und/oder die Unterseite des Trennstreifens (36) aufnehmende Aufnahmenuten (46) ausgebildet sind, **dadurch gekennzeichnet, dass** die Aufnahmenuten (46) von in den Grundkörper eingesetzten Einsatzteilen (60) gebildet werden, und dass im oder am Grundkörper (21) Haltemittel (48) zum Halten des Trennstreifens (36) in Form von Haltemagneten vorgesehen sind.

2. Lötdüse (20) nach Anspruch 1, **dadurch gekennzeichnet, dass** die Einsatzteile (60) zur Höhenverstellung des Trennstreifens (36) gegenüber dem Grundkörper (21) höhenverstellbar ausgebildet sind.

3. Lötdüse (20) nach Anspruch 1 oder 2, **dadurch gekennzeichnet, dass** Einsatzteile (60) einen Bolzenabschnitt (62) aufweisen, der in einer Bolzenführung (64) axial verschiebbar angeordnet ist und dass Festsetzmittel (66) zum Festsetzen des Bolzenabschnitts (64) vorgesehen sind.

4. Lötdüse (20) nach einem der vorhergehenden Ansprüche, **dadurch gekennzeichnet, dass** auf der dem Trennstreifen (36) abgewandten Seite des Bodens (52) des Wellenabschnitts (26) Magnetausnehmungen (50) vorgesehen sind, in denen mit dem Trennstreifen (36) zusammenwirkende Haltemagnete (48) angeordnet sind.

5. Lötdüse (20) nach Anspruch 4, **dadurch gekennzeichnet, dass** Vorspannfedern (54) vorgesehen sind, mit denen die Haltemagnete (48) gegen den Boden (52) des Wellenabschnitts (26) vorgespannt angeordnet werden.

6. Lötdüse (20) nach Anspruch 5, **dadurch gekennzeichnet, dass** die Vorspannfedern (54) als Spiralfedern ausgebildet sind, deren eines Ende sich am jeweiligen Haltemagnet (48) abstützt und deren anderes Ende sich an einem in den Grundkörper einschraubbaren Gewindebolzen (56) abstützt.

7. Lötanlage mit einer Düsenplatte (10) und mit wenigstens einer Lötdüse (20) nach einem der vorhergehenden Ansprüche.

## Claims

1. Soldering nozzle (20) for simultaneously selectively wave soldering at least two spaced apart rows of soldering points in a soldering installation, comprising a main body (21) which has a base portion (22) which can be arranged on a nozzle plate (10) and a shaft portion (26) which forms the soldering shaft during operation and has a circumferential wall (32) having a free upper side (34), and comprising at least one separating strip (36) which can be wetted with solder and which can be used in the shaft portion (26), the at least one separating strip (36) being frameless and being made ferromagnetic material at least in portions, the separating strip (36) having free narrow sides (42) and an underside, the narrow sides (42) and/or the underside (40) coming into contact with contact portions (44) when the separating strip (36) is inserted into the shaft portion (26), and the contact portions being designed as the receiving grooves (46) which receive the narrow sides (42) and/or the underside of the separating strip (36), **characterized in that** the receiving grooves (46) are formed by insert parts (60) inserted into the main body, and **in that** holding means (48) for holding the separating strip (36) are provided in or on the main body (21) in the form of holding magnets.

2. Soldering nozzle (20) according to claim 1, **characterized in that** the insert parts (60) are height-adjustable in order to adjust the height of the separating strip (36) in relation to the main body (21).

3. Soldering nozzle (20) according to claim 1 or claim 2, **characterized in that** the insert parts (60) have a bolt portion (62) which is arranged in a bolt guide (64) so as to be axially movable, and **in that** fixing means (66) are provided for fixing the bolt portion (64).

4. Soldering nozzle (20) according to any of the preceding claims, **characterized in that** magnet recesses (50) are provided on the side of the bottom (52) of the wave portion (26) that faces away from the separating strip (36), in which magnet recesses holding magnets (48) which interact with the separating strip (36) are arranged.

5. Soldering nozzle (20) according to claim 4, **characterized in that** pretensioned springs (54) are provided by means of which the holding magnets (48) are pre-loaded against the bottom (52) of the wave portion (26).

6. Soldering nozzle (20) according to claim 5, **characterized in that** the pretensioned springs (54) are designed as spiral springs, one end of which is supported on the relevant holding magnet (48) and the other end of which is supported on a threaded bolt (56) which can be screwed into the main body.

7. Soldering installation comprising a nozzle plate (10) and comprising at least one soldering nozzle (20) according to any of the preceding claims.

## Revendications

1. Buse de brasage (20) pour braser à la vague de manière sélective simultanément au moins deux rangées disposées à distance d'emplacements de brasage dans une installation de brasage, avec un corps principal (21), qui présente une partie de base (22) pouvant être disposée sur une plaque porte-buse (10) et une partie ondulée (26) réalisant la vague de brasage pendant le fonctionnement, présentant une paroi périphérique (32) avec une face supérieure libre (34), et avec au moins une bande de séparation (36) pouvant être insérée dans la partie ondulée (26), pouvant être imprégnée de métal d'apport de brasage, dans laquelle la au moins une bande de séparation (36) est réalisée sans cadre et au moins sur certaines parties à partir d'un matériau ferromagnétique, dans laquelle la bande de séparation (36) présente des petits côtés (42) libres et une face inférieure, dans laquelle les petits côtés (42) et/ou la face inférieure (40) viennent s'appliquer sur des parties d'appui (44) lorsque la bande de séparation (36) est insérée dans la partie ondulée (26), et dans laquelle les parties d'appui sont réalisées en tant que rainures de réception (46) recevant les petits côtés (42) et/ou la face inférieure de la bande de séparation (36), **caractérisée en ce que** les rainures de réception (46) sont formées de pièces d'insertion (60) insérées dans le corps principal et que des moyens de retenue (48) pour retenir la bande de séparation (36) sous forme d'aimants de retenue sont prévus dans ou sur le corps principal (21).

2. Buse de brasage (20) selon la revendication 1, **caractérisée en ce que** les pièces d'insertion (60) sont réalisées de manière réglable en hauteur pour le réglage en hauteur de la bande de séparation (36) par rapport au corps principal (21).

3. Buse de brasage (20) selon la revendication 1 ou 2, **caractérisée en ce que** les pièces d'insertion (60) présentent une partie de boulon (62), qui est disposée de manière coulissante axialement dans un guidage de boulon (64) et que des moyens de fixation (66) sont prévus pour fixer la partie de boulon (64).

4. Buse de brasage (20) selon l'une quelconque des revendications précédentes, **caractérisée en ce que** des évidements magnétiques (50), dans lesquels sont disposés des aimants de retenue (48) coopérant avec la bande de séparation (36), sont prévus sur la face du fond (52) de la partie ondulée (26) opposée à la bande de séparation (36).

5. Buse de brasage (20) selon la revendication 4, **caractérisée en ce que** des ressorts de précontrainte (54) sont prévus, avec lesquels les aimants de retenue (48) sont disposés de manière précontrainte contre le fond (52) de la partie ondulée (26).

6. Buse de brasage (20) selon la revendication 5, **caractérisée en ce que** les ressorts de précontrainte (54) sont réalisés en tant que ressorts hélicoïdaux, dont une extrémité s'appuie sur l'aimant de retenue (48) respectif et dont l'autre extrémité s'appuie sur un boulon fileté (56) pouvant être vissé dans le corps principal.

7. Installation de brasage avec une plaque porte-buse (10) et avec au moins une buse de brasage (20) selon l'une quelconque des revendications précédentes.
